(19)

Europäisches
Patentamt
European
Patent Office
Office européen
des brevets

(11)  **EP 2 762 442 A1**

(12)  **EUROPEAN PATENT APPLICATION**

(43) Date of publication:
**06.08.2014 Bulletin 2014/32**

(51) Int Cl.:
***C01B 3/38*** ^(2006.01)

(21) Application number: **14165707.2**

(22) Date of filing: **23.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **AIR PRODUCTS AND CHEMICALS, INC. Allentown, PA 18195-1501 (US)**

(72) Inventors:
• **Robertson, Eric Anthony III**
  **Easton, PA 8042 (US)**
• **Hoke, Bryan Clair Jr.**
  **Bethlehem, PA 8020 (US)**

(74) Representative: **Schwabe - Sandmair - Marx Patentanwälte**
  **Stuntzstraße 16**
  **81677 München (DE)**

(54)  **Process for reforming higher hydrocarbons**

(57)   A hydrocarbon reforming process for reforming higher hydrocarbons using a prereformer and a primary reformer where the steam-to-carbon molar ratio ranges from 1.5 to 2.99 and the hydrogen stoichiometric ratio ranges from 0.01 to 1 or where the steam-to-carbon molar ratio ranges from 1.5 to 5 and the hydrogen stoichiometric ratio ranges from 0.01 to 0.095.

EP 2 762 442 A1

**Description**

BACKGROUND

The present invention relates to a process for reforming higher hydrocarbons to produce a synthesis gas (syngas) product and/or a hydrogen product. A synthesis gas product is a product comprising primarily CO and $H_2$. Synthesis gas may be further reacted in one or more shift reactors to form additional $H_2$ in the process stream and separated in a separation unit, such as a pressure swing adsorption unit, to form a $H_2$ product.

Synthesis gas is conventionally used to produce synthesis gas products such as synthetic crude, or further upgraded to form intermediate or end products, for example lubricant basestock, lubricants, greases, middle distillate fuels, diesel, linear alkylbenzenes aviation and jet fuels, gasoline, and other chemicals, i.e. normal- and isoparaffinic solvents. The synthesis gas may also be used to produce one or more oxygenates, for example, ethers and/or alcohols.

Synthesis gas (including hydrogen) can be produced from methane-containing feedstocks by any number of primary synthesis gas generation reactors. For example, synthesis can be produced in a steam methane reformer (SMR), an endothermic reactor carried out either in heat exchange reactors, or by other means where substantial heat may be transferred to the reacting fluid, such as in the case of autothermal reforming (ATR), where a portion of the feedstock is combusted inside the reactor to provide heat for steam reforming either subsequently or in the same location as the combustion.

Synthesis gas can also be produced from methane-containing feedstocks by $CO_2$ ("dry") reforming, catalytic or thermal partial oxidation (CPOx or POx, respectively) and other processes known in the art.

If the feedstock contains higher hydrocarbons than methane, that is, hydrocarbons having 2 or more carbon atoms are used in the reforming process, the risk for catalyst deactivation by carbon deposition in the synthesis gas generation reactor is increased.

In order to reduce the risk of carbon deposition, hydrogen and synthesis gas production processes typically employ at least one catalytic reactor prior to the synthesis gas generation reactor where the catalytic reactor is operated at conditions less prone to hydrocarbon cracking than the primary synthesis gas generation reactor. These reactors positioned before the primary synthesis gas generation reactors are referred to as prereformers. Pre-reformers can be operated adiabatically or convectively heated by indirect heat transfer with combustion products gases from the primary synthesis gas generation reactor.

In hydrogen and synthesis gas production processes employing pre-reformers and steam methane reformers, the hydrocarbon feedstock is mixed with 1 to 5 % hydrogen by volume and subsequently subjected to a hydrodesulphurization (HDS) pretreatment to remove sulphur. The hydrocarbon feedstock may also be treated to remove olefins in a hydrogenation reactor.

The feedstock, after pretreating, is combined with superheated steam to form "mixed feed" having a prescribed steam-to-carbon molar ratio. The steam-to-carbon molar ratio, S/C, is the ratio of the molar flow rate of steam in the mixed feed to the molar flow rate of hydrocarbon-based carbon in the mixed feed. The "steam-to-carbon molar ratio" is a conventional term used in the art.

The steam-to-carbon molar ratio for steam methane reforming of natural gas typically ranges from 2 to 5. The steam-to-carbon molar ratio is generally higher for steam methane reforming of feedstock containing a greater amount of higher hydrocarbons, for example, propane, butane, propane/butane mixtures, and naphtha.

Higher steam flow rates are used to suppress carbon formation and enhance the steam reforming reaction. However, higher steam-to-carbon molar ratios disadvantageously decrease the energy efficiency of the reforming process.

US 8,591,861 discloses a synthesis gas production process using a prereformer. In one embodiment the hydrocarbon feed stream comprises a mixture of $H_2$ and more than 5% of at least one component selected from the group consisting of hydrocarbons having two or more carbon atoms and alcohols having two or more carbon atoms. The hydrogen stoichiometric ratio, A, for the feed stream ranges from 0.1 to 1.5. The hydrogen stoichiometric ratio is defined in US 8,591,861 in a somewhat unconventional way. The steam-to-carbon molar ratio ranges from 3 to 4.

In another embodiment of US 8,591,861, the hydrocarbon feed stream comprises a mixture of $H_2$ and more than 20% of at least one component selected from the group consisting of hydrocarbons having two or more carbon atoms and alcohols having two or more carbon atoms. The hydrogen stoichiometric ratio, A, for the feed stream ranges from 0.25 to 1.0. The steam-to-carbon molar ratio ranges from 3 to 4.

EP 1586535 discloses a process for prereforming and reforming natural gas containing higher hydrocarbons. EP 1586535 discloses to operate with a steam-to-carbon molar ratio of from about 1.5 to about 3.0. EP 1586535 discloses that typically, the concentration of methane in natural gas can vary from about 85% to about 99%, where the total concentration of higher hydrocarbons typically varies from about less than 1% to about 15%. EP 1586535 discloses that the concentration of ethane in natural gas typically varies from about 0.1% to about 10%, the concentration of propane varies from about 0.1 % to 5%, and that of butane from about 0.1 % to about 2%.

EP 1586535 discloses that for the hydrodesulphurization step, up to 5% hydrogen is added to the natural gas to keep the desulfurization catalyst in a reduced and active form and to desulphurize the the natural gas and that in some cases the amount of hydrogen added to the feed stream can be higher than 5%. It is typical to have a recycle ratio of hydrogen to the feed stream of 1% to 5% on a molar basis. The amount of hydrogen reacted in the hydrodesulphurization unit is very small since sulfur is present at ppm concentrations.

The hydrogen stoichiometric ratio in EP 1586535 can be calculated from the hydrogen recycle ratio and typical natural gas compositions. For example, the North American Combustion Handbook, Vol. 1, 3rd Edition, 1986, provides a compositional analysis of typical gaseous fuels in table 2.12a. Pittsburgh, PA natural gas is disclosed to have 83.4 mole % methane, 15.8 mole % ethane and 0.8 mole % $N_2$. Birmingham, AL natural gas is disclosed to have 90.0 mole % methane, 5 mole % ethane, and 5 mole % $N_2$.

The hydrogen stoichiometric ratio, defined in the conventional way, is the molar quantity of hydrogen supplied divided by the molar quantity required to convert the higher hydrocarbons to methane.

Using a basis molar flow rate of 100 moles/h of natural gas, the molar flow rate of ethane in Pittsburgh natural gas is 15.8 moles/h and the molar flow rate of $H_2$ needed to convert the ethane to methane is 15.8 moles/h of $H_2$, since 1 mole of $H_2$ is need for every mole of ethane. For the case where the hydrogen recycle ratio is 1% (i.e. 1 mole of $H_2$ for every 100 moles of natural gas feed), the hydrogen stoichiometric ratio is 1/15.8 = 0.063. For the case where the hydrogen recycle ratio is 5% (i.e. 5 moles of $H_2$ for every 100 moles of natural gas feed), the hydrogen stoichiometric ratio is 5/15.8 = 0.316.

Likewise, using a basis molar flow rate of 100 moles/h of natural gas, the molar flow rate of ethane in Birmingham natural gas is 5.0 moles/h and the molar flow rate of $H_2$ needed to convert the ethane to methane is 5.0 moles/h of $H_2$, since 1 mole of $H_2$ is need for every mole of ethane. For the case where the hydrogen recycle ratio is 1 %, the hydrogen stoichiometric ratio is 1/5.0 = 0.2. For the case where the hydrogen recycle ratio is 5%, the hydrogen stoichiometric ratio is 5/5.0 = 1.

Then it can be deduced from EP 1586535 that the hydrogen stoichiometric ratio for natural gas having 5% to 15.8% ethane, can range from about 0.063 to about 1.0.

Industry desires steam reforming processes that produce synthesis gas and/or hydrogen from higher hydrocarbons with improved efficiency and with little or no carbon formation in the reactors.

BRIEF SUMMARY

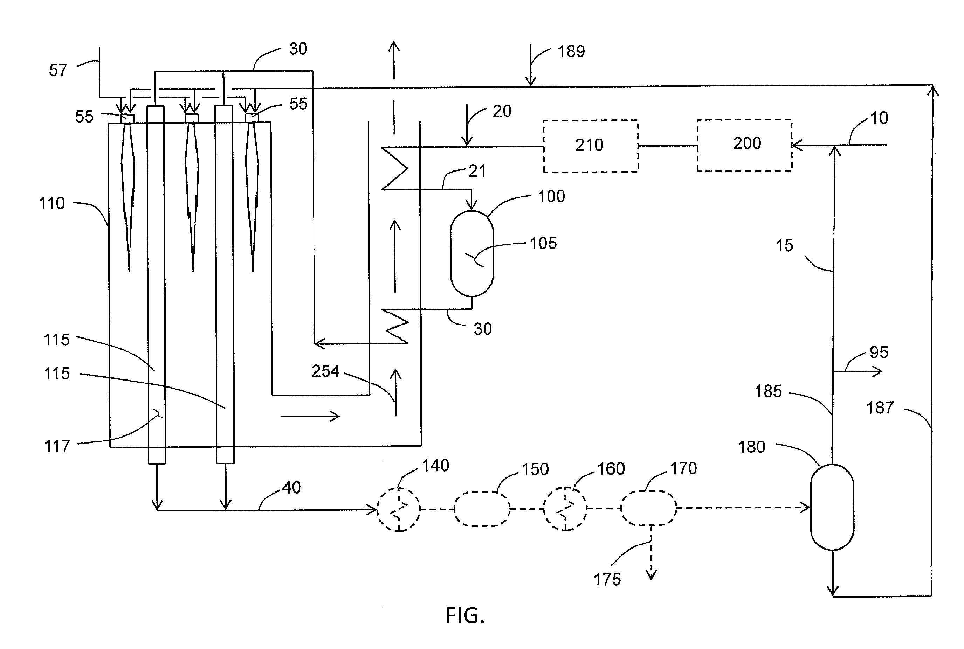

There are several aspects of the process as outlined below. In the following, specific aspects of the process will be outlined. The reference numbers and expressions set in parentheses are referring to an example embodiment explained further below with reference to the figure. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

Aspect 1. A hydrocarbon reforming process comprising:

introducing a feed stream (21) comprising a mixture of hydrocarbons, $H_2$, and steam into a first reactor (100) wherein the mixture comprises greater than 20 mole % C2+ hydrocarbons having 2 or more carbon atoms on a dry basis;
reacting the mixture in the first reactor (100) in the presence of a catalyst (105) under reaction conditions sufficient to produce a first product mixture (30) comprising $CH_4$ formed by the reaction of the C2+ hydrocarbons with the $H_2$;
introducing the first product mixture (30) into a second reactor (110); and
reacting the first product mixture (30) in the second reactor in the presence of a reforming catalyst (117) under reaction conditions sufficient to produce a product stream (40) comprising $H_2$ and CO;
characterized by:

(i) the mixture having $H_2$ present in an amount to provide a hydrogen stoichiometric ratio, A, where $0.01 \leq \lambda \leq 1$, wherein the hydrogen stoichiometric ratio is defined as the ratio of the $H_2$ molar flow rate to the stoichiometric $H_2$ molar flow rate required to convert all the C2+ hydrocarbons in the mixture to methane; and
(ii) the mixture having steam present in an amount to provide a steam-to-carbon molar ratio, S/C, where $1.5 \leq \dfrac{S}{C} \leq 2.99$,

wherein $\dfrac{S}{C} = \dfrac{F_s}{F_c}$, where $F_s$ is the molar flow rate of steam in the feed stream, and $F_c$ is the molar flow rate of hydrocarbon-based carbon in the feed stream.

Aspect 2. The process of aspect 1 where $2 \leq \dfrac{S}{C} \leq 2.99$.

Aspect 3. The process of aspect 1 or aspect 2 where $0.1 \leq \lambda \leq 1$.

Aspect 4. A hydrocarbon reforming process comprising:

introducing a feed stream (21) comprising a mixture of hydrocarbons, $H_2$, and steam into a first reactor (100) wherein the mixture comprises greater than 20 mole % C2+ hydrocarbons having 2 or more carbon atoms on a dry basis;
reacting the mixture in the first reactor (100) in the presence of a catalyst (105) under reaction conditions sufficient to produce a first product mixture (30) comprising $CH_4$ formed by the reaction of the C2+ hydrocarbons with the $H_2$;
introducing the first product mixture (30) into a second reactor (110); and
reacting the first product mixture (30) in the second reactor in the presence of a reforming catalyst (117) under reaction conditions sufficient to produce a product stream (40) comprising $H_2$ and CO;
characterized by:

(i) the mixture having $H_2$ present in an amount to provide a hydrogen stoichiometric ratio, $\lambda$, where $0.01 \leq \lambda \leq 0.095$, wherein the hydrogen stoichiometric ratio is defined as the ratio of the $H_2$ molar flow rate to the stoichiometric $H_2$ molar flow rate required to convert all the C2+ hydrocarbons in the mixture to methane; and
(ii) the mixture having steam present in an amount to provide a steam-to-carbon molar ratio, S/C, where $1.5 \leq \dfrac{S}{C} \leq 5$, wherein

$$\frac{S}{C} = \frac{F_s}{F_C}$$

, where $F_s$ is the molar flow rate of steam in the feed stream, and $F_c$ is the molar flow rate of hydrocarbon-based carbon in the feed stream.

Aspect 5. The process of the preceding aspect where $\lambda \leq 0.09$ or $\lambda \leq 0.08$.

Aspect 6. The process of the preceding aspect where $\lambda \leq 0.06$ or $\lambda \leq 0.05$.

Aspect 7. The process of any one of aspects 4 to 6 where S/C > 3.

Aspect 8. The process of the preceding aspect where S/C > 4.

Aspect 9. The process of any one of the preceding aspects wherein the mixture comprises greater than 30 mole % C2+ hydrocarbons on a dry basis.

Aspect 10. The process of any one of the preceding aspects wherein the mixture comprises greater than 50 mole % C2+ hydrocarbons on a dry basis.

Aspect 11. The process of any one of the preceding aspects wherein the mixture comprises greater than 80 mole% C2+ hydrocarbons on a dry basis.

Aspect 12. The process of any one of the preceding aspects wherein the mixture comprises at least 30 mole % ethane on a dry basis or at least 50 mole % ethane on a dry basis.

Aspect 13. The process of any one of the preceding aspects wherein the mixture comprises greater than 35 mole % propane on a dry basis or greater than 50 mole % on a dry basis.

Aspect 14. The process of any one of the preceding aspects wherein the mixture comprises greater than 35 mole % butane on a dry basis or greater than 50 mole % on a dry basis.

Aspect 15. The process of any one of the preceding aspects wherein the feed stream (21) is formed at least in part from at least one of naphtha, refinery off-gas, and refinery fuel gas.

Aspect 16. The process of any one of the preceding aspects wherein a portion of the product stream (40) is recycled to the feed stream (21) thereby providing at least a portion of the $H_2$ in the mixture.

Aspect 17. The process of any one of the preceding aspects wherein the first reactor (100) is a prereformer.

Aspect 18. The process of any one of the preceding aspects wherein the first reactor (100) is operated adiabatically.

Aspect 19. The process of any one of aspects 1 to 11 wherein heat is provided to the mixture in the first reactor (100) by indirect heat transfer with combustion product gases (254) from the second reactor (110).

Aspect 20. The process of any one of the preceding aspects wherein the catalyst (105) in the first reactor (100) is a nickel-based catalyst.

Aspect 21. The process of any one of the preceding aspects wherein the second reactor (110) is a steam methane reformer.

Aspect 22. The process of any one of aspects 1 to 14 wherein the second reactor (110) is a mixed conducting membrane reactor.

Aspect 23. The process of any one of the preceding aspects further comprising:

passing at least a portion of the product stream (40) from the second reactor (110) to a pressure swing adsorption unit (180) to form a $H_2$ product stream (185) and a tail gas stream (187); and

passing a portion (15) of the $H_2$ product stream (185) to the first reactor (100) thereby providing at least a portion of the $H_2$ in the mixture.

Aspect 24. The process of any one of aspects 1 to 22 further comprising:

passing at least a portion of the product stream (40) from the second reactor (110) to a cryogenic separation unit to form at least one of a CO product stream, a $H_2$ product stream, and an oxogas product (CO/$H_2$ mixture); and

passing a portion (15) of the $H_2$ product stream to the first reactor (100) thereby providing at least a portion of the $H_2$ in the mixture.

BRIEF DESCRIPTION OF SEVERAL VIEWS OF THE DRAWINGS

The sole figure shows a process flow diagram for the process.

DETAILED DESCRIPTION OF THE PREFERRED EMBODIMENTS

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity. The term "and/or" placed between the last two entities of a list of 3 or more entities means at least one of the entities in the list including any specific combination of entities in this list.

The phrase "at least a portion" means "a portion or all." The at least a portion of a stream may have the same composition with the same concentration of each of the species as the stream from which it is derived. The at least a portion of a stream may have a different composition to that of the stream from which it is derived. The at least a portion of a stream may include specific components of the stream from which it is derived.

As used herein, "first," "second," "third," etc. are used to distinguish from among a plurality of steps and/or features, and is not indicative of the total number, or relative position in time and/or space unless expressly stated as such.

The present invention relates to a steam-hydrocarbon reforming process. More specifically, the present invention relates to a steam-hydrocarbon reforming process for reforming feedstock having a higher hydrocarbon concentration greater than found in natural gas.

The process is described with reference to the sole FIGURE.

The process comprises introducing a feed stream 21 comprising a mixture of hydrocarbons, $H_2$, and steam into a first reactor 100. The mixture comprises greater than 20 mole % C2+ hydrocarbons on a dry basis. C2+ hydrocarbons are hydrocarbons having 2 or more carbon atoms, e.g. ethane, ethene, propane, propene, butane, butene, etc. The concentration of the C2+ hydrocarbons on a "dry basis" means that the concentration of steam is not included in the determination of the concentration, as is known in the art.

The mixture may comprise greater than 50 mole % or greater than 80 mole % C2+ hydrocarbons on a dry basis.

The mixture may comprise greater than 35 mole % propane on a dry basis.

The mixture may comprise greater than 35 mole % butane on a dry basis.

The feed stream 21 may be formed at least in part from at least one of naphtha, refinery off-gas, and refinery fuel gas.

The feedstock 10 for forming the feed stream 21 may be pretreated prior to being introduced into the first reactor 100. As shown in the figure, the feedstock may be pretreated in a hydrogenation unit 200 to convert olefins to their alkane counterparts and/or a hydrodesulphurization unit 210 to remove sulfur.

As shown in the figure, hydrogen 15 may be mixed with the feedstock prior to introducing the feedstock 10 into the hydrogenation unit or the hydrodesulphurization unit. Hydrogen 15 is needed in the case of olefins in the hydrocarbon feedstock for reaction in the hydrogenation unit 200 to convert olefins to alkanes. Hydrogen 15 is needed in the case of sulfur in the hydrocarbon feedstock for reaction in the hydrodesulphurization unit 210 to form $H_2S$, which is typically removed by reaction with Zn in the hydrodesulphurization unit 210.

Hydrogen 15 may be supplied from any available source. As shown in the figure, hydrogen 15 may be conveniently supplied from a portion of a $H_2$ product stream from pressure swing adsorber 180.

The process may comprise recycling a portion of the product stream 40 to the feed stream 21 thereby providing at least a portion of the $H_2$ in the mixture.

Steam 20 is mixed with the feedstock after optional pretreatment to form feed stream 21, which is typically called "mixed feed." The feed stream 21 may be heated by indirect heat transfer with combustion product gases from second reactor 110, for example in the convection section of steam methane reformer.

The process further comprises reacting the mixture in the first reactor 100 in the presence of a catalyst 105 under reaction conditions sufficient to produce a first product mixture 30 comprising $CH_4$ formed by the reaction of the C2+ hydrocarbons with the $H_2$.

The first reactor 100 may be a so-called prereformer.

The first reactor 100 may be operated adiabatically.

Alternatively, heat may be provided to the mixture in the first reactor 100 by indirect heat transfer with combustion product gases from the second reactor 110, i.e. a so-called convective prereformer.

The catalyst 105 in the first reactor 100 may be a nickel-based catalyst. Any suitable catalyst known in the art for reforming or prereforming may be used.

The reaction conditions in the first reactor 100 may include a temperature ranging from 425°C to 730°C and a pressure ranging from 0.2 MPa (2 atm.) to 5.6 MPa (55 atm.).

The process further comprises introducing the first product mixture 30 into a second reactor. The second reactor may be any synthesis gas generation reactor known for producing synthesis gas.

The second reactor 110 may be a steam methane reformer. Steam methane reformers and their operation are well-known in the art.

The second reactor may be a mixed conducting membrane reactor as disclosed, for example, in U.S. 6,110,979, incorporated herein by reference.

The process further comprises reacting the first product mixture 30 in the second reactor 110 in the presence of a reforming catalyst 117 under reaction conditions sufficient to produce a product stream 40 comprising $H_2$ and CO (i.e. synthesis gas).

The reforming catalyst 117 may be any suitable reforming catalyst known in the art.

The reaction conditions in the second reactor may include a temperature ranging from 500°C to 1000°C and a pressure ranging from 0.2 MPa (2 atm.) to 5.6 MPa (55 atm.).

In a first embodiment of the process, the mixture has $H_2$ present in an amount to provide a hydrogen stoichiometric ratio, A, ranging from 0.01 to 1 or ranging from 0.1 to 1. The hydrogen stoichiometric ratio is defined herein as the ratio of the $H_2$ molar flow rate to the stoichiometric $H_2$ molar flow rate required to convert all the C2+ hydrocarbons in the mixture to methane. The hydrogen stoichiometric ratio is defined herein in the conventional manner, and is different than the definition in U.S. 8,591,861.

An exemplary calculation of the hydrogen stoichiometric ratio is provided below.

The hydrogen stoichiometric ratio is calculated for an exemplary stream containing 50 mole % methane, 30 mole % ethane, 15 mole % propane, and 5 mole % hydrogen. A basis molar flow rate of 100 moles/h is used.

The molar flow rate of ethane is 30 moles/h. 1 mole of $H_2$ is required for each mole of ethane to convert the ethane to methane. Then, 30 moles/h of $H_2$ are required to convert the ethane in the stream to methane.

The molar flow rate of propane is 15 moles/h. 2 moles of $H_2$ are required for each mole of propane to convert the propane to methane. Then 30 moles/h of $H_2$ are required to convert the propane to methane.

The total molar flow rate of $H_2$ required to convert the C2+ hydrocarbons (i.e. ethane and propane) to methane is 60 mole/h. This is the stoichiometric amount of $H_2$ needed.

The $H_2$ molar flow rate is 5 moles/h.

Then the hydrogen stoichiometric ratio for this exemplary calculation is 5/60 = 0.083.

In the first embodiment, the mixture has steam present in an amount to provide a steam-to-carbon molar ratio, S/C, ranging from 1.5 to 2.99 or ranging from 2 to 2.99. The steam-to-carbon ratio, S/C, is ratio of the molar flow rate of steam in the feed stream, $F_s$, to the molar flow rate of hydrocarbon-based carbon in the feed stream, $F_c$, (i.e. $\frac{S}{C} = \frac{F_s}{F_c}$).

For the exemplary stream with a basis molar flow rate of 100 moles/h, the molar flow rate of hydrocarbon-based carbon is 155 moles C/h (50 moles C/h for methane, 60 moles C/h for ethane, and 45 moles C/h for propane).

For a steam-to-carbon ratio of 2.0, 310 moles/h of steam are required.

It has been discovered that lower steam-to-carbon ratios may be used in the first reactor even when reforming feedstock with greater quantities of higher hydrocarbons, thereby improving the process efficiency.

In a second embodiment of the process, the mixture has $H_2$ present in an amount to provide a hydrogen stoichiometric ratio, A, ranging from 0.01 to 0.095.

In the second embodiment, the mixture has steam present in an amount to provide a steam-to-carbon molar ratio, S/C, ranging from 1.5 to 5 or ranging from 2 to 4.

It has been discovered that much less hydrogen needs to be recycled to the first reactor since hydrogen is generated in-situ within the first reactor. Since less hydrogen is recycle, more hydrogen is available for export.

The product stream 40 may be used to generate steam in a waste heat boiler 140 by indirect heat transfer. At least a portion of the steam generated in the waste heat boiler 140 may be used as steam 20 in the process feed.

The product stream 40 may be further processed in one or more shift reactors 150 if desired.

The product stream 40 may be cooled in a heat exchanger 160 to condense water from the product stream 40. Water 175 may be removed from the product stream 40 in a knock-out drum 170.

Carbon dioxide may be removed from product stream in a $CO_2$ stripper (not shown), if desired.

The process may further comprise passing at least a portion of the product stream 40 to a separation unit 180 to form a hydrogen product stream 175 and a tail gas stream 187. The separation unit 180 may be a pressure swing adsorber. A portion 95 of the hydrogen product stream 185 may be exported from the process. Another portion 15 may be recycled to the first reactor 100 in feed stream 21. The $H_2$ may be recycled to the first reactor 100 by way of the hydrodesulphurization unit 200 and/or the hydrogenation unit 210.

The tail gas stream 187 may be used as a fuel in the second reactor 110. The tail gas may be blended with make up fuel 189 and passed to burners 55 where the tail gas and make up fuel are combusted with an oxygen-containing gas 57 external to a plurality of catalyst-containing tubes 115.

The process may further comprise passing at least a portion of the product stream (40) from the second reactor (110) to a cryogenic separation unit to form at least one of a CO product stream, a $H_2$ product stream, and an oxogas product. An oxogas is a mixture of CO and $H_2$ having a desired $CO:H_2$ molar ratio. A portion (15) of the $H_2$ product stream may be passed to the first reactor (100) thereby providing at least a portion of the $H_2$ in the mixture.

**Claims**

1.   A hydrocarbon reforming process comprising:

    introducing a feed stream (21) comprising a mixture of hydrocarbons, $H_2$, and steam into a first reactor (100) wherein the mixture comprises greater than 20 mole % C2+ hydrocarbons having 2 or more carbon atoms on a dry basis;
    reacting the mixture in the first reactor (100) in the presence of a catalyst (105) under reaction conditions sufficient to produce a first product mixture (30) comprising $CH_4$ formed by the re-

action of the C2+ hydrocarbons with the $H_2$;
introducing the first product mixture (30) into a second reactor (110);
reacting the first product mixture (30) in the second reactor in the presence of a reforming catalyst (117) under reaction conditions sufficient to produce a product stream (40) comprising $H_2$ and CO;
the mixture having $H_2$ present in an amount to provide a hydrogen stoichiometric ratio, A, wherein the hydrogen stoichiometric ratio is defined as the ratio of the $H_2$ molar flow rate to the stoichiometric $H_2$ molar flow rate required to convert all the C2+ hydrocarbons in the mixture to methane; and
the mixture having steam present in an amount to provide a steam-to-carbon molar ratio, where-

in $\dfrac{S}{C} = \dfrac{F_s}{F_C}$ , where $F_s$ is the molar flow rate of steam in the feed stream, and $F_c$ is the molar flow rate of hydrocarbon-based carbon in the feed stream.
**characterized by**:

    (i) $0.01 \leq \lambda \leq 1$ and   $1.5 \leq \dfrac{S}{C} \leq 2.99$;

    or

    (ii) $0.01 \leq \lambda \leq 0.095$ and   $1.5 \leq \dfrac{S}{C} \leq 5$.

2.   The process of claim 1 (i) where $2 \leq \dfrac{S}{C} \leq 2.99$ and/or $0.1 \leq \lambda \leq 1$

3.   The process of claim 1 (ii) wherein $\lambda \leq 0.09$, preferably $\lambda \leq 0.08$, and/or S/C > 3, preferably S/C > 4.

4.   The process of any one of the preceding claims wherein the mixture comprises greater than 50 mole % C2+ hydrocarbons on a dry basis or greater than 80 mole% C2+ hydrocarbons on a dry basis.

5.   The process of any one of the preceding claims wherein the mixture comprises at least 30 mole % ethane on a dry basis.

6.   The process of any one of the preceding claims wherein the mixture comprises greater than 35 mole % propane on a dry basis.

7.   The process of any one of the preceding claims wherein the mixture comprises greater than 35 mole % butane on a dry basis.

8. The process of any one of the preceding claims wherein the feed stream (21) is formed at least in part from at least one of naphtha, refinery off-gas, and refinery fuel gas.

9. The process of any one of the preceding claims wherein a portion of the product stream (40) is recycled to the feed stream (21) thereby providing at least a portion of the $H_2$ in the mixture.

10. The process of any one of the preceding claims wherein the first reactor (100) is a prereformer.

11. The process of any one of the preceding claims wherein the first reactor (100) is operated adiabatically.

12. The process of any one of claims 1 to 10 wherein heat is provided to the mixture in the first reactor (100) by indirect heat transfer with combustion product gases (254) from the second reactor (110).

13. The process of any one of the preceding claims wherein the second reactor (110) is a steam methane reformer.

14. The process of any one of claims 1 to 12 wherein the second reactor (110) is a mixed conducting membrane reactor.

15. The process of any one of the preceding claims further comprising:

   passing at least a portion of the product stream (40) from the second reactor (110) to a pressure swing adsorption unit (180) to form a $H_2$ product stream (185) and a tail gas stream (187); and passing a portion (15) of the $H_2$ product stream (185) to the first reactor (100) thereby providing at least a portion of the $H_2$ in the mixture.

FIG.

EP 2 762 442 A1

Europäisches
Patentamt

European
Patent Office

Office européen
des brevets

## EUROPEAN SEARCH REPORT

Application Number

EP 14 16 5707

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 8 591 861 B2 (LOMAX FRANKLIN D [US] ET AL) 26 November 2013 (2013-11-26) * column 2, line 54 - column 5, line 10; claims; figure 1; examples * | 1-15 | INV. C01B3/38 |
| X,D | EP 1 586 535 A2 (AIR PROD & CHEM [US]) 19 October 2005 (2005-10-19) * the whole document * | 1-15 | |
| X | WO 2013/015687 A1 (STAMICARBON B V ACTING UNDER THE NAME OF MT INNOVATION CT [NL]; IAQUAN) 31 January 2013 (2013-01-31) * figure 1 * | 1-15 | |
| A | US 2009/230359 A1 (GUVELIOGLU GALIP HAKAN [US] ET AL) 17 September 2009 (2009-09-17) * figure 6 * | 12,15 | |

TECHNICAL FIELDS
SEARCHED       (IPC)

C01B

The present search report has been drawn up for all claims

| Place of search | Date of completion of the search | Examiner |
|---|---|---|
| The Hague | 3 July 2014 | Engelen, Karen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 14 16 5707

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2014

| Patent document cited in search report | | Publication date | Patent family member(s) | | Publication date |
|---|---|---|---|---|---|
| US 8591861 | B2 | 26-11-2013 | US | 2008262110 A1 | 23-10-2008 |
| | | | WO | 2008131049 A1 | 30-10-2008 |
| EP 1586535 | A2 | 19-10-2005 | CA | 2500645 A1 | 19-09-2005 |
| | | | CN | 1669909 A | 21-09-2005 |
| | | | EP | 1586535 A2 | 19-10-2005 |
| | | | US | 2005207970 A1 | 22-09-2005 |
| WO 2013015687 | A1 | 31-01-2013 | CA | 2842913 A1 | 31-01-2013 |
| | | | EA | 201490336 A1 | 30-06-2014 |
| | | | EP | 2736840 A1 | 04-06-2014 |
| | | | WO | 2013015687 A1 | 31-01-2013 |
| US 2009230359 | A1 | 17-09-2009 | CA | 2657669 A1 | 17-09-2009 |
| | | | CN | 101538014 A | 23-09-2009 |
| | | | US | 2009230359 A1 | 17-09-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8591861 B
- EP 1586535 A
- US 6110979 A

**Non-patent literature cited in the description**

- North American Combustion Handbook. 1986, vol. 1